# EUROPÄISCHE PATENTSCHRIFT

(11) **EP 1 511 329 B1**
(45) Veröffentlichungstag und Bekanntmachung des Hinweises auf die Patenterteilung: **11.10.2006**
(21) Anmeldenummer: 03019719.8
(22) Anmeldetag: 29.08.2003
(51) Int. Cl.: H04Q 3/00

(54) **Verfahren zur Überprüfung einer Identifikation eines Links einer V5.x-Schnittstelle**
Method for checking an identification of a link of a V5.x interface
Procédé pour vérifier une identification d'un lien d'une interface V5.x

(43) Veröffentlichungstag der Anmeldung: 02.03.2005
(73) Patentinhaber: SIEMENS AKTIENGESELLSCHAFT, 80333 München (DE)
(72) Erfinder: Amberger, Dieter, 2000 Stockerau (AT)
(74) Vertreter: Berg, Peter

(56) Entgegenhaltungen:
- "V interfaces at the digital Local Exchange (LE); V5.2 interface for the support of Access Network (AN); Part 1: V5.2 interface specification" ETSI EN 300 347-1 V.2.2.2, Dezember 1999 (1999-12), Seiten 1-179, XP002273400

## Beschreibung

Die Erfindung betrifft ein Verfahren zur Überprüfung einer Identifikation eines Links einer V5.x-Schnittstelle, insbesondere einer V5.2-Schnittstelle, zwischen einem Vermittlungsknoten und einem Anschlussnetzwerk, wobei eine erste Nachricht zur Überprüfung des Links vom Vermittlungsknoten zum Anschlussnetzwerk gesendet wird.

Ein Beispiel für ein solches Verfahren ist etwa der Link Identification Check einer V5.2-Schnittstelle. Eine V5.2-Schnittstelle ist eine standardisierte Schnittstelle zwischen einer Vermittlungsstelle und einem Teilnehmeranschlussnetz. Sie besteht aus 1 bis 16 Links, die jeweils eindeutig identifiziert werden. Ein solcher Link hat dabei gewöhnlich eine Übertragungskapazität von 2048 kbit/s.

Der Link Identification Check ist in ETSI EN 300 347-1; Kap. 16.2 standardisiert und wird dazu verwendet, um die Identifikation eines Links, also den sogenannten Link Identifier, für einen bestimmen Link einer V5.2-Schnittstelle zu überprüfen.

Da die Administration (Provisioning) der System-Daten einer V5.2-Schnittstelle im Vermittlungsknoten und im Teilnehmeranschlussnetz getrennt über Q-Schnittstellen erfolgt, ist es sinnvoll, im Hochlauf oder im laufenden Betrieb Maßnahmen zu treffen, die sicherstellen, dass die Administration der Link Identifier im Vermittlungsknoten und im Teilnehmeranschlussnetz konsistent ist und diese Links auch korrekt miteinander verschaltet sind.

Das im Standard ETSI EN 300 347-1, Kap. 16.2 beschriebene Verfahren des Link Identification Checks soll diese Überprüfung für einen bestimmten 2048 kbit/s Link durchführen. Wenn die Gegenseite der V5.2-Schnittstelle die Anforderung zu einem Link Identification Check akzeptiert, sendet sie ein bestimmtes physikalisches Signal auf dem Link, der in der Aufforderung angegeben wurde. Dabei wird das Bit Sa7 im Timeslot 0 auf 0 gesetzt, während es sonst immer auf 1 gesetzt wird. Dieses Signal erlaubt es der initiierenden Seite der V5.2-Schnittstelle festzustellen, ob eine Inkonsistenz zwischen den Enden des Links besteht, die durch fehlerhafte Administration oder Verschaltung hervorgerufen wurde.

Problematisch ist dabei, dass dieser Link Identification Check nur dann zufriedenstellend funktioniert, wenn der Link Identifier, der überprüft werden soll, auch tatsächliche an der Gegenseite der V5.2-Schnittstelle eingerichtet ist. Ist dies nicht der Fall, wird die Nachricht des Link Control Protokolls, die den Link Identification Check initiiert (LINK CONTROL[FE-IDReq]) standard-konform ignoriert und keine Quittung, das heißt keine LINK CONTROL ACK[FE-IDReq] Nachricht an den initiierende Seite der V5.2-Schnittstelle zurück gesendet (siehe ETSI EN 300 347-1, Kapitel 16.3.5.2). Nach einer vorgegebenen Wartezeit von 1s (Timer LCTO1 gemäss ETSI EN 300 347-1, Kap. 16.3.6) wird die Nachricht LINK CONTROL[FE-IDReq] wiederholt. Diese Nachricht wird erneut von der Gegenseite ignoriert, da der in der Nachricht enthaltene Link Identifier nicht bekannt ist. Daraufhin wird der Link Identification Check abgebrochen, und es wird lediglich eine MDU-link_control (Protocol_error_indication) wegen des zweimaligen Timeouts an das System Management gesendet. Der eigentliche Fehler wird aber aufgrund des Abbruchs des Link Identification Checks nicht erkannt. Dies hat zur Folge, dass immer dann ein Fehler auftritt, wenn seitens des Vermittlungsknotens versucht wird, einen Timeslot auf dem fehlerhaften Link zu allokieren. Abhängig vom implementierten Algorithmus der Timeslot-Selektion im Vermittlungsknoten führt der inkonsistent eingerichtete Link Identifier zu sporadisch auftretenden Störungen.

Dies ist ein sehr unbefriedigender Zustand, da die Ursache dieser sporadischen Fehler nicht oder nur schwierig erkannt werden kann.

Der Erfindung liegt daher die Aufgabe zugrunde, ein Verfahren zur Überprüfung einer Identifikation eines Links einer V5.x-Schnittstelle, insbesondere einer V5.2-Schnittstelle, anzugeben, bei dem nicht korrekt eingerichtete Identifikationen eines Links an V5.x-Schnittstellen zuverlässig erkannt werden.

Dies geschieht erfindungsgemäß mit einem Verfahren der eingangs genannten Art, wobei bei Nichterhalt einer Quittung auf die erste Nachricht, insbesondere auch nicht nach Wiederholung der ersten Nachricht, eine zweite Nachricht anderen Typs zur Überprüfung des Links vom Vermittlungsknoten zum Teilnehmeranschlussnetz gesendet wird, wobei auf die zweite Nachricht in jedem Fall eine Quittung gesendet wird.

Wie bereits erwähnt, führt der Abbruch der Überprüfung einer Identifikation eines Links, etwa in Form des standardisierten Link Identification Checks, zu keinem verwertbaren Ergebnis. Erfindungsgemäß wird daher bei Nichterhalt einer Antwort auf die erste Nachricht eine zweite Nachricht anderen Typs gesendet. Dieses Verfahren wird hier vorteilhaft eingesetzt, um ein konkretes Ergebnis zu erhalten.

Günstig ist es, wenn die zweite Nachricht nach einer vorgegebenen Wartezeit nach dem Senden der ersten Nachricht gesendet wird.

Das Abwarten einer Wartezeit stellt eine sehr einfache und daher vorteilhafte Möglichkeit für eine Kriterium zum Senden der zweiten Nachricht dar. Eine Realisierung ist daher auf einfache Weise möglich.

Vorteilhaft ist es weiterhin, wenn aus einer Quittung auf die zweite Nachricht weitere Maßnahmen, insbesondere das Ausgeben einer Fehlermeldung und/oder die Außerbetriebnahme der Verbindung, eingeleitet werden.

Hierbei wird angenommen, dass auf die zweite Nachricht in jedem Fall eine Quittung gesendet wird. Lässt sich aus dieser Quittung nun ableiten, dass die Verbindung nicht ordnungsgemäß funktioniert, wird beispielsweise eine entsprechende Fehlermeldung ausgegeben und/oder der Link außer Betrieb genommen. Auf diese Weise wird das Bedienpersonal eines Vermittlungsknotens optimal informiert beziehungsweise auch weitgehend entlastet.

Besonders vorteilhaft ist es,
- wenn als erste Nachricht eine LINK CONTROL[FE-IDReq] Nachricht gemäß dem Standard ETSI EN 300 347-1 vorgesehen wird,
- wenn als Quittung auf die erste Nachricht eine LINK CONTROL ACK[FE-IDReq] Nachricht gemäß dem Standard ETSI EN 300 347-1 vorgesehen wird und
- wenn als zweite Nachricht eine BCC[AUDIT] Nachricht gemäß dem Standard ETSI EN 300 347-1 vorgesehen wird.

Wie eingangs erwähnt, führt eine LINK CONTROL[FE-IDReq] Nachricht nicht unbedingt zu einem verwertbaren Ergebnis. Erfindungsgemäß wird daher bei Nichterhalt einer LINK CONTROL ACK[FE-IDReq] Nachricht eine zweite Nachricht anderen Typs, nämlich eine BCC[AUDIT]-Nachricht nach dem Bearer Channel Connection Protokoll, kurz BCC-Protokoll, gesendet. Dieses Protokoll dient eigentlich zum Allokieren, Deallokieren und Auditieren von Timeslot-Verbindungen von Teilnehmeranschlüssen, wird aber hier vorteilhaft eingesetzt, um den Link Identification Check fortzusetzen und ein konkretes Ergebnis zu erhalten.

Vorteilhaft ist es dabei, wenn die BCC[AUDIT] Nachricht nach einer vorgegebenen Wartezeit, insbesondere nach Ablauf des Timers LCTO1 von 1 Sekunde, nach dem Senden der LINK CONTROL[FE-IDReq] Nachricht gesendet wird.

Das Abwarten einer Wartezeit stellt eine sehr einfache und daher vorteilhafte Möglichkeit für eine Kriterium zum Senden der BCC[AUDIT] Nachricht dar. Wird also entsprechend dem Standard ETSI EN 300 347-1 nach einer Sekunde (Timer LCTO1) keine LINK CONTROL ACK[FE-IDReq] Nachricht erhalten, insbesondere auch nicht nach Wiederholung der LINK CONTROL[FE-IDReq] Nachricht, so wird die Überprüfung des Link Identifiers mit der erwähnten BCC[AUDIT] Nachricht fortgesetzt.

Günstig ist es, wenn die BCC[AUDIT] Nachricht den Parameter "V5 Time Slot Identification" beinhaltet, wobei als "V5 2048 kbit/s link Identifier" die zu prüfende Identifikation des Links und als "V5 Time Slot Number" ein beliebiger Zeitschlitz dieses Links, welcher als Bearer Channel definiert wird, eingetragen wird.

Hierbei wird auf standardisierte Parameter der BCC[AUDIT] Nachricht zurückgegriffen. Eine Realisierung ist daher auf besonders einfache Weise möglich.

Günstig ist es auch,
- wenn als Quittung auf die zweite Nachricht eine BCC[AUDIT COMPLETE] Nachricht gemäß dem Standard ETSI EN 300 347-1 vorgesehen wird und
- wenn aus der BCC[AUDIT COMPLETE] Nachricht weitere Maßnahmen, insbesondere das Ausgeben einer Fehlermeldung und/oder die Außerbetriebnahme des Links, abgeleitet werden.

Als Folge der BCC[AUDIT]-Nachricht wird in jedem Fall, das heißt auch wenn der entsprechende Link Identifier im Teilnehmeranschlussnetz nicht eingerichtet ist, eine BCC[AUDIT COMPLETE] Nachricht erhalten. Lässt sich aus dieser Antwort ableiten, dass der Link Identifier auf der Teilnehmeranschlussnetzseite der V5.2-Schnittstelle nicht eingerichtet ist, wird beispielsweise eine entsprechende Fehlermeldung ausgegeben und/oder der 2048 kbit/s Link außer Betrieb genommen. Auf diese Weise wird das Bedienpersonal eines Vermittlungsknoten optimal informiert beziehungsweise auch weitgehend entlastet.

Günstig ist auch ein Verfahren, bei dem weitere Maßnahmen eingeleitet werden, wenn die BCC[AUDIT COMPLETE] Nachricht das Information Element "Connection Incomplete" mit dem Reason "Invalid V5 2048 kbit/s link identification" enthält.

Hierbei wird eine im Standard definierte BCC[AUDIT COMPLETE]-Nachricht vorteilhaft ausgenützt, um bei negativem Ausgang der Überprüfung des Link Identifiers entsprechende Maßnahmen einzuleiten, insbesondere das Ausgeben einer Fehlermeldung und/oder die Außerbetriebnahme der Verbindung. Eine Realisierung des erfindungsgemäßen Verfahrens ist daher bei dieser Variante auf besonders einfache Weise möglich.

Die Erfindung wird im folgenden anhand eines in den Figuren dargestellten Ausführungsbeispiels näher erläutert, welches den Link Identification Check an V5.2-Schnittstellen betrifft.

Es zeigen:
Figur 1: einen Link Identification Check entsprechend ETSI EN 300 347-1, der ordnungsgemäß ausgeführt wird;
Figur 2: einen Link Identification Check entsprechend ETSI EN 300 347-1 für einen Link Identifier, der im Teilnehmeranschlussnetz AN nicht administriert wurde;
Figur 3: einen verbesserten Link Identification Check gemäß vorliegender Erfindung;

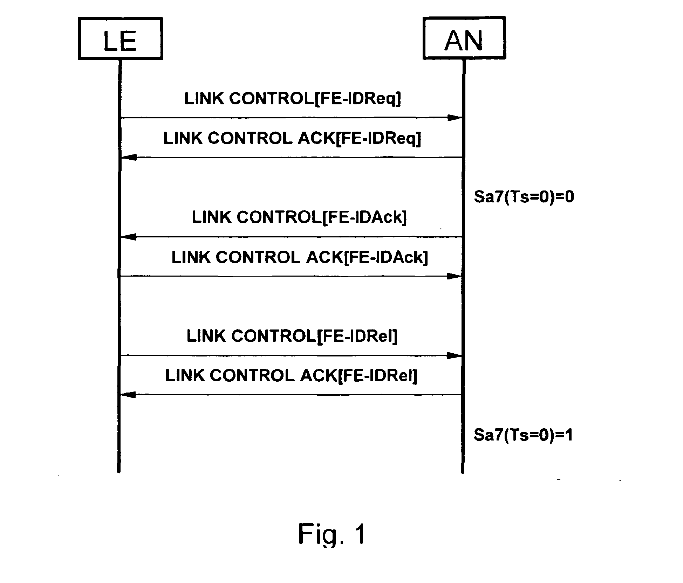

Figur 1 zeigt den Meldungsablauf eines vom Vermittlungsknoten LE initiierten Link Identification Checks gemäß Standard ETSI EN 300 347-1. Dabei wird vom Vermittlungsknoten LE eine LINK CONTROL[FE-IDReq] Nachricht an das Teilnehmeranschlussnetz AN gesendet. In Folge wird eine LINK CONTROL ACK[FE-IDReq] Quittung zurück zum Vermittlungsknoten LE gesendet, das Bit Sa7 im Timeslot 0 des zu prüfenden Links auf 0 gesetzt Sa7(Ts=0)=0 und eine LINK CONTROL[FE-IDAck] vom Teilnehmeranschlussnetz AN zum Vermittlungsknoten LE gesendet. In Folge wird vom Vermittlungsknoten LE eine LINK CONTROL ACK[FE-IDAck] Quittung an das Teilnehmeranschlussnetz AN gesendet. Das Bit Sa7 im Timeslot 0 wird nun im Vermittlungsknoten LE ausgewertet. Somit kann festgestellt werden ob dieser Link korrekt geschaltet und administriert ist. Danach sendet der Vermittlungsknoten LE zur Beendigung des Link Identification Checks die Nachricht LINK CONTROL[FE-IDRel] an das Teilnehmeranschlussnetz AN. Diese wird mit der LINK CONTROL ACK[FE-IDRel] Quittung beantwortet. Zum Abschluss wird das Bit Sa7 im Teilnehmeranschlussnetz AN wieder auf den Normalwert 1 gesetzt Sa7(Ts=0)=1.

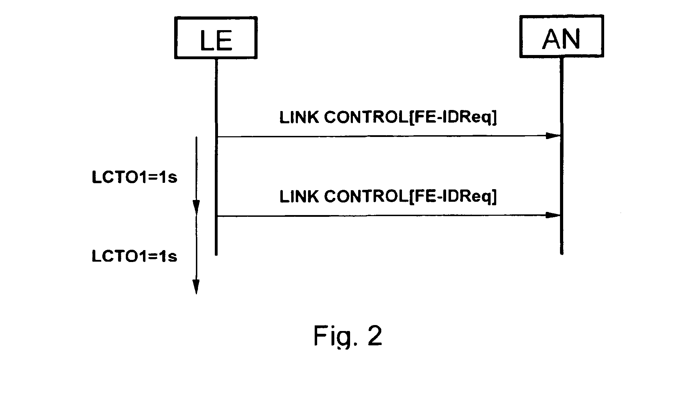

Figur 2 zeigt das Verfahren gemäß Figur 1, jedoch ist hier der vom Vermittlungsknoten LE zu prüfende Link Identifier im Teilnehmeranschlussnetz AN nicht bekannt. Das Teilnehmeranschlussnetz AN ignoriert daraufhin entsprechend dem Standard EN 300 347-1 die Nachricht LINK CONTROL[FE-IDReq] anstatt diese zu quittieren und anschließend den Link Identification Check zu akzeptieren oder abzulehnen. Nach Ablauf des Timers LCTO1=1s wird die Nachricht LINK CONTROL[FE-IDReq] seitens des Vermittlungsknotens LE erneut gesendet. Diese Nachricht wird wie bereits gezeigt im Teilnehmeranschlussnetz AN neuerlich ignoriert, worauf der Link Identification Check für diesen Link Identifier ohne Ergebnis abgebrochen wird. Ein Fehler des geprüften Link Identifiers kann alleine aus dem zweimaligen Ausbleiben einer entsprechenden Quittung auf die Nachricht LINK CONTROL[FE-IDReq] jedoch nicht abgeleitet werden.

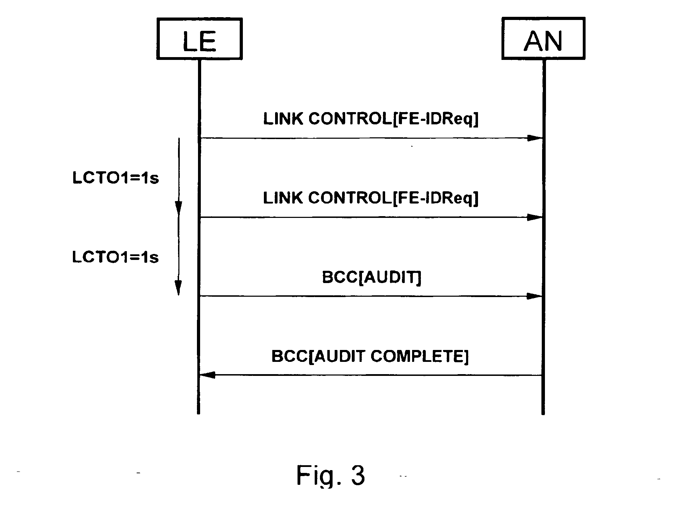

Figur 3 zeigt schließlich das erfindungsgemäße Verfahren in Form eines verbesserten Link Identification Checks. Dabei werden wie in Figur 2 zwei LINK CONTROL[FE-IDReq] Nachrichten vom Vermittlungsknoten LE zum Teilnehmeranschlussnetz AN gesendet, ohne dass eine LINK CONTROL ACK[FE-IDReq] Quittung vom Teilnehmeranschlussnetz AN zurück zum Vermittlungsknoten LE gesendet werden würde. Nach dem zweiten Ablauf des Timers LCTO1=1s, wird eine BCC[AUDIT] Nachricht des Bearer Channel Connection Protokolls vom Vermittlungsknoten LE zum Teilnehmeranschlussnetz AN gesendet. Diese soll im gegebenen Beispiel folgende Parameter, beziehungsweise Information Elements beinhalten (siehe auch ETSI EN 300 347-1, Kapitel 17.3.7) :
- Protocol Discriminator = h'48
- BCC Reference Number
- Message Type = AUDIT
- V5 Time Slot Identification

Das Information Element "V5 Time Slot Identification" beinhaltet dabei als "V5 2048 kbit/s link Identifier" den zu prüfenden Link Identifier und die "V5 Time Slot Number" einen beliebigen Timeslot auf diesem 2048 kbit/s Link, der als Bearer Channel definiert ist.

In Folge dessen wird vom Teilnehmeranschlussnetz AN eine BCC[AUDIT COMPLETE] Nachricht an den Vermittlungsknoten LE gesendet. Enthält diese die Parameter oder Information Elements:
- Protocol Discriminator = h'48
- BCC Reference Number (identisch zu "AUDIT"-Nachricht)
- Message Type = AUDIT COMPLETE
- Connection Incomplete (Reason: "Invalid V5 2048 kbit/s link identification" - siehe auch ETSI EN 300 347-1, Kapitel 17.4.2.7, Table 45),
so geht daraus eindeutig hervor, dass der geprüfte Link Identifier im Teilnehmeranschlussnetz AN nicht administriert ist. Es kann nun eine präzise Fehlermeldung ausgegeben werden, aus der die Art des Fehlers für das Bedienpersonal klar ersichtlich wird. Weiterhin kann eine automatische Außerbetriebnahme dieses 2048 kbit/s Links vorgenommen werden.

Es wird an dieser Stelle angemerkt, dass der angeführte Link Identification Check hier nicht als Einschränkung des allgemeinen erfinderischen Gedankens verstanden werden soll, sondern als eine mögliche Ausführungsform.

## Patentansprüche

1. Verfahren zur Überprüfung einer Identifikation eines Links einer V5.x-Schnittstelle, insbesondere einer V5.2-Schnittstelle, zwischen einem Vermittlungsknoten (LE) und einem Teilnehmeranschlussnetz (AN),
- wobei eine erste Nachricht zur Überprüfung des Links vom Vermittlungsknoten (LE) zum Teilnehmeranschlussnetz (AN) gesendet wird,
**dadurch gekennzeichnet,**
- **dass** bei Nichterhalt einer Quittung auf die erste Nachricht, insbesondere auch nicht nach Wiederholung der ersten Nachricht, eine zweite Nachricht anderen Typs zur Überprüfung des Links vom Ermittlungsknoten (LE) zum Teilnehmeranschlussnetz (AN) gesendet wird wobei auf die zweite Nachricht in jedem Fall eine Quittung gesendet wird.

2. Verfahren nach Anspruch 1, **dadurch gekennzeichnet, dass** die zweite Nachricht nach einer vorgegebenen Wartezeit nach dem Senden der ersten Nachricht gesendet wird.

3. Verfahren nach einem der Ansprüche 1 bis 2, **dadurch gekennzeichnet, dass** aus einer Quittung auf die zweite Nachricht weitere Maßnahmen, insbesondere das Ausgeben einer Fehlermeldung und/oder die Außerbetriebnahme des Links, abgeleitet werden.

4. Verfahren nach Anspruch 1,
**dadurch gekennzeichnet,**
- **dass** als erste Nachricht eine LINK CONTROL[FE-IDReq] Nachricht gemäß dem Standard ETSI EN 300 347-1 vorgesehen wird,
- **dass** als Quittung auf die erste Nachricht eine LINK CONTROL ACK[FE-IDReq] Nachricht gemäß dem Standard ETSI EN 300 347-1 vorgesehen wird und
- **dass** als zweite Nachricht eine BCC[AUDIT] Nachricht gemäß dem Standard ETSI EN 300 347-1 vorgesehen wird.

5. Verfahren nach Anspruch 4, **dadurch gekennzeichnet, dass** die BCC [AUDIT] Nachricht nach einer vorgegebenen Wartezeit, insbesondere nach Ablauf des Timers LCTO1 von 1 Sekunde, nach dem Senden der LINK CONTROL[FE-IDReq] Nachricht gesendet wird.

6. Verfahren nach einem der Ansprüche 4 bis 5, **dadurch gekennzeichnet, dass** die BCC [AUDIT] Nachricht den Parameter "V5 Time Slot Identification" beinhaltet, wobei als "V5 2048 kbit/s link Identifier" die zu prüfende Identifikation des Links und als "V5 Time Slot Number" ein beliebiger Zeitschlitz dieses Links, welcher als Bearer Channel definiert wird, eingetragen wird.

7. Verfahren nach einem der Ansprüche 4 bis 6, **dadurch gekennzeichnet,**
- **dass** als Quittung auf die zweite Nachricht eine BCC[AUDIT COMPLETE] Nachricht gemäß dem Standard ETSI EN 300 347-1 vorgesehen wird und
- **dass** aus der BCC[AUDIT COMPLETE] Nachricht weitere Maßnahmen, insbesondere das Ausgeben einer Fehlermeldung und/oder die Außerbetriebnahme des Links, abgeleitet werden.

8. Verfahren nach Anspruch 7, **dadurch gekennzeichnet, dass** weitere Maßnahmen eingeleitet werden, wenn die BCC[AUDIT COMPLETE] Nachricht den Parameter "Connection Incomplete" mit dem Reason "Invalid V5 2048 kbit/s link identification" enthält.

## Claims

1. Method for checking an identification of a link of a V5.x interface, in particular a V5.2 interface, between a switching node (LE) and a subscriber line network (AN)
- wherein a first message for checking the link is sent from the switching node (LE) to the subscriber line network (AN),
**characterised in that**
- if an acknowledgement is not received in response to the first message, in particular also not in response to a repetition thereof, a second message of another type for checking the link will be sent from the switching node (LE) to the subscriber line network (AN), with an acknowledgement being sent in any event in response to said second message.

2. Method according to claim 1, **characterised in that** the second message is sent after a pre-specified waiting time after the first message has been sent.

3. Method according to one of the claims 1 to 2,
**characterised in that** further measures, in particular outputting an error message and/or taking the link out of operation, are derived from an acknowledgement of the second message.

4. Method according to claim 1,
**characterised in that**
- a LINK CONTROL[FE-IDReq] message according to the ETSI EN 300 347-1 standard is provided as the first message,
- a LINK CONTROL ACK[FE-IDReq] message according to the ETSI EN 300 347-1 standard is provided as the acknowledgement in response to the first message and
- a BCC[AUDIT] message according to the ETSI EN 300 347-1 standard is provided as the second message.

5. Method according to claim 4, **characterised in that** the BCC[AUDIT] message is sent after a pre-specified waiting time, in particular after the 1-second LCTO1 timer has timed out, after the LINK CONTROL[FE-IDReq] message has been sent.

6. Method according to one of the claims 4 to 5,
**characterised in that** the BCC [AUDIT] message includes the parameter "V5 Time Slot Identification", with the link's identification requiring to be checked being entered as the "V5 2048 kbit/s link identifier" and with any one of the link's timeslots defined as a bearer channel being entered as the "V5 Time Slot Number".

7. Method according to one of the claims 4 to 6,
**characterised in that**
- a BCC[AUDIT COMPLETE] message according to the ETSI EN 300 347-1 standard is provided as the acknowledgement in response to the second message and
- further measures, in particular outputting an error message and/or taking the link out of operation, are derived from the BCC[AUDIT COMPLETE] message.

8. Method according to claim 7, **characterised in that** further measures will be initiated if the BCC[AUDIT COMPLETE] message contains the parameter "Connection Incomplete" with the reason "Invalid VS 2048 kbit/s link identification".

## Revendications

1. Procédé de vérification d'une identification d'un lien d'une interface V5.x, notamment d'une interface V5.2, entre un point nodal (LE) de commutation et un réseau local de lignes (AN),
- dans lequel on envoie un premier message de vérification du lien du point nodal (LE) de commutation au réseau local de ligne (AN),
**caractérisé**
- **en ce que**, s'il n'est pas reçu un accusé de réception du premier message, notamment même pas après une répétition du premier message, on envoie un deuxième message d'un autre type de vérification du lien du point nodal (LE) de commutation au réseau local de lignes (AN), un accusé de réception étant envoyé en tout cas sur le deuxième message.

2. Procédé suivant la revendication 1, **caractérisé en ce que** l'on envoie le deuxième message après une durée d'attente prescrite après l'émission du premier message.

3. Procédé suivant la revendication 1 à 2, **caractérisé en ce qu'**on déduit d'un accusé de réception du deuxième message d'avoir à effectuer d'autres mesures, notamment l'émission d'un avertissement d'erreur et/ou la mise hors de fonctionnement du lien.

4. Procédé suivant la revendication 1, **caractérisé**
- **en ce qu'**on prévoit comme premier message un message LINK CONTROL [FE-IDReq] suivant la norme ETSI EN 300 347-1,
- **en ce que** l'on prévoit comme accusé de réception du premier message un message LINK CONTROL ACK [FE-IDReq] suivant la norme ETSI EN 300 347-1, et
- **en ce que** l'on prévoit comme deuxième message un message BCC [AUDIT] suivant la norme ETSI EN 300 347-1.

5. Procédé suivant la revendication 4, **caractérisé en ce que** l'on envoie le message BCC [AUDIT] après une durée d'attente prescrite, notamment après écoulement de la minuterie LCTO1 de 1 seconde après l'émission du message LINK CONTROL [FE-IDReq].

6. Procédé suivant l'une des revendications 4 à 5, **caractérisé en ce que** le message BCC [AUDIT] contient le paramètre « V5 Time Slot Identification » en portant comme « V5 2048 kbit/s link Identifier » l'identification à vérifier du lien et comme « V5 Time Slot Number » un créneau temporel quelconque de ce lien qui est défini comme Bearer Channel.

7. Procédé suivant l'une des revendications 4 à 6, **caractérisé**
- **en ce que** l'on prévoit comme accusé de réception du deuxième message un message BCC [AUDIT COMPLETE] suivant la norme ETSI EN 300 347-1, et
- **en ce que** l'on déduit du message BCC [AUDIT COMPLETE] d'avoir à effectuer d'autres mesures, notamment l'émission d'un avertissement d'erreur et/ou la mise hors de fonctionnement du lien.

8. Procédé suivant la revendication 7, **caractérisé en ce que** l'on prend d'autres mesures si le message BCC [AUDIT COMPLETE] contient le paramètre « Connection Incomplete » ayant le Reason « Invalid V5 2048 kbit/s identification ».
